# EUROPÄISCHE PATENTSCHRIFT

(11) **EP 2 742 287 B1**
(45) Veröffentlichungstag und Bekanntmachung des Hinweises auf die Patenterteilung: **30.09.2015**
(21) Anmeldenummer: 12768699.6
(22) Anmeldetag: 11.07.2012
(51) Int. Cl.: F23K 3/02, F23N 1/02, F23N 5/18, G01F 1/64, G01F 1/712

(54) **KOHLEKRAFTWERKSFEUERUNGSANLAGE MIT EINRICHTUNG ZUR STEUERUNG DES BRENNSTOFF-LUFT-VERHÄLTNISSES BEI DER VERBRENNUNG GEMAHLENER KOHLE UND VERFAHREN ZUM BETRIEB DER KOHLEKRAFTWERKSFEUERUNGSANLAGE**
FIRING SYSTEM OF A COAL-FIRED POWER STATION WITH DEVICE FOR CONTROLLING THE FUEL-AIR RATIO IN THE COMBUSTION OF GROUND COAL AND METHOD OF OPERATING THE FIRING SYSTEM
INSTALLATION DE COMBUSTION D'UNE CENTRALE AU CHARBON BROYÉ AVEC DISPOSITIF DE RÉGULATION DU RAPPORT AIR-COMBUSTIBLE LORS DE LA COMBUSTION DE CHARBON ET PROCÉDÉ D'OPÉRATION DE L'INSTALLATION

(30) Priorität: 13.07.2011 DE 102011107195
(43) Veröffentlichungstag der Anmeldung: 18.06.2014
(73) Patentinhaber: Promecon Prozess- und Messtechnik Conrads GmbH, 39179 Barleben (DE)
(72) Erfinder: CONRADS, Hans, Georg, 30625 Hannover (DE); HALM, Alexander, 39291 Hohenwarthe (DE); BOHM, Martin, 39110 Magdeburg (DE)
(74) Vertreter: Fischer, Volker
(86) Internationale Anmeldenummer: PCT/DE2012/000696
(87) Internationale Veröffentlichungsnummer: WO 2013/007239

(56) Entgegenhaltungen:
- WO-A1-03/056316
- DE-A1-102008 030 650
- US-A- 4 509 366
- US-A- 4 512 200
- US-A- 5 022 274

## Beschreibung

Die Erfindung betrifft eine Einrichtung zur Steuerung des Brennstoff-Luft-Verhältnisses bei der Verbrennung gemahlener Kohle in einer Kohlekraftwerksfeuerungsanlage, die Mittel zur pneumatischen Förderung der gemahlenen Kohle zu den Brennern der Kohlekraftwerksfeuerungsanlage sowie Mittel zur Zuführung von Verbrennungsluft zu den Brennern bzw. in den Feuerungsraum der Kohlekraftwerksfeuerungsanlage aufweist, wobei die Kohlekraftwerksfeuerungsanlage in Strömungsrichtung der Luft mindestens nachfolgende Einrichtungen aufweist:
Einen Frischlüfter zum Ansaugen von Frischluft aus der Umgebung, einen Mühlenlüfter zur Förderung eines Teiles der angesaugten Frischluft als Tragluft zur Beladung mit gemahlener Kohle, einen Luftvorwärmer zur Vorwärmung der angesaugten Frischluft und eines Teiles der Tragluft unter Nutzung der Rauchgaswärme der Kohlekraftwerksfeuerungsanlage, eine Luftmengensteuereinrichtung zur Steuerung der in den Feuerungsraum eingeleiteten Verbrennungsluftmenge, eine Luftmengensteuereinrichtung zur Steuerung der für die pneumatische Förderung der gemahlenen Kohle zu verwendenden Tragluft sowie Messeinrichtungen zur Messung der in den Kohlekraftwerksfeuerungsraum eingeleiteten Verbrennungsluftmenge und eine Einrichtung zur dosierten Zuführung einer vorgewählten Menge an gemahlener Kohle zu den Brennern.
Die Erfindung betrifft weiterhin ein Verfahren zur Steuerung des Brennstoff-Luft-Verhältnisses bei der Verbrennung gemahlener Kohle in einer Kohlekraftwerksfeuerungsanlage, die mindestens die vorstehend aufgeführten Merkmale aufweist.

Der Steuerung des Brennstoff-Luft-Verhältnisses bei der Verbrennung gemahlener Kohle in Kohlekraftwerksfeuerungsanlagen kommt zur Erreichung einer im Wesentlichen vollständigen Verbrennung des zugeführten Brennstoffes bzw. zur Einhaltung einer vorgegebenen Stöchiometrie des Verbrennungsprozesses und damit zur Erreichung eines hohen energetischen Wirkungsgrades sowie zur Einhaltung niedriger Emissionswerte eine besondere Bedeutung zu. Feuerungsanlagen in Kohlekraftwerken weisen daher neben geeigneten Einrichtungen zur dosierten Zuführung einer entsprechend der abgeforderten Last vorgewählten Brennstoffmenge zu den Brennern Steuereinrichtungen auf, mit denen die den Brennern bzw. dem Feuerungsraum zugeführte Luftmenge in Abhängigkeit von der zugeführten Brennstoffmenge gesteuert wird. Dazu sind Messeinrichtungen erforderlich, mittels derer die in den Feuerungsraum eingeleitete Luftmenge, und zwar die Verbrennungsluftmenge und die Tragluftmenge, möglichst exakt messtechnisch erfasst werden kann. Beides ist notwendig, um lastabhängig den Verbrennungsprozess optimal zu regeln, wobei die Brennstoffmenge und damit auch die Tragluftmenge entsprechend der abgeforderten Last vorgewählt wird und die Verbrennungsluftmenge zur Erzielung einer vorbestimmten Stöchiometrie der Verbrennung gesteuert wird.
In der Praxis sind sowohl Kohlekraftwerksfeuerungsanlagen anzutreffen, bei denen jedem einzelnen Brenner oder einer Gruppe von Brennern eine vorgewählte Menge an gemahlener Kohle zugeführt wird und entsprechend dieser vorgewählten Menge an gemahlener Kohle die diesem Brenner oder dieser Gruppe von Brennern zugeführte Luftmenge zur Erzielung einer vorbestimmten Stöchiometrie der Verbrennung gesteuert wird, als auch Feuerungsanlagen, bei denen lediglich die Gesamtmenge der allen Brennern eines Kessels zugeführten Menge an gemahlener Kohle vorgewählt wird und entsprechend auch nur die insgesamt allen Brennern dieses Kessels bzw. dem Kessel insgesamt zugeführte Luftmenge gesteuert wird.
In jedem Fall ist es notwendig, die dem Kessel zugeführte Luftmenge entweder bezogen auf einen einzelnen Brenner oder auf eine Gruppe von Brennern oder auf alle Brenner eines Kessels bzw. den Kessel insgesamt messtechnisch zu erfassen, um die entsprechende/n Steuerung/en der Verbrennungsluftmenge zu realisieren und so den Verbrennungsprozess zu regeln.
Weiterhin wird bei Kraftwerksfeuerungsanlagen mit pneumatischer Förderung der gemahlenen Kohle zu den Brennern die Tragluftmenge für den pneumatischen Kohletransport gesteuert. Auch diese Steuerung erfordert eine messtechnische Erfassung der Tragluftmenge.
Überwiegend erfolgt in Kohlekraftwerksfeuerungsanlagen die Luftmengenmessung unter Anwendung von Druckmesssonden mittels Differenzdruckmessung. Dazu werden jeweils in das die Verbrennungsluft führende Rohr- bzw. Kanalsystem sowie in das die Tragluft führende Rohr- bzw. Kanalsystem Druckmesssonden installiert. Anhand der gemessenen Drücke kann die Strömungsgeschwindigkeit in den Kanälen bestimmt und unter Einbeziehung der Kanalgeometrie die jeweilig Luftmenge ermittelt werden. Bevorzugt befinden sich die Druckmesssonden nicht direkt im Kanalquerschnitt, sondern sind über sogenannte Impulsleitungen mit den die Luft führenden Kanälen verbunden.
Zur Verbesserung des energetischen Wirkungsgrades einer Kraftwerksfeuerungsanlage ist es üblich, die Frischluft vorzuwärmen. Häufig werden hierzu Regenerativ-Luftvorwärmer eingesetzt. Bei Regenerativ-Luftvorwärmern wird eine Speichermasse, meist glatte oder gewellte Bleche, abwechselnd zunächst vom heißen Rauchgas erwärmt und nachfolgend von der Frischluft abgekühlt, so dass eine Wärmeübertragung vom Rauchgas auf die Frischluft erfolgt. Verbunden hiermit ist der Eintrag von Flugaschepartikeln in die Frischluft. Beim Betrieb einer Kraftwerksfeuerungsanlage führt dies regelmäßig zur Verschmutzung der Druckmesssonden bzw. der Impulsleitungen. Kontinuierliche Reinigungs- und Wartungsarbeiten sind die Folge. Problematisch ist, dass der Grad der Verschmutzung der Druckmesssonden nicht eindeutig anhand der gemessenen Differenzdrücke bestimmt werden kann und die Messergebnisse daher bei fortschreitendem Betrieb mit einem erheblichen Fehlerrisiko behaftet sind. Ein nur mit hohem Aufwand feststellbares Driften der Luftmengenmessung ist die Folge. Letztlich führt dieses zu einer ungenauen Steuerung des Brennstoff-Luft-Verhältnisses, verbunden mit einem verschlechterten Wirkungsgrad und erhöhten Schadstoffemissionen.
Aus dem Stand der Technik sind Messeinrichtungen bekannt, die triboelektrische Effekte an in Strömungsrichtung des partikelbeladenen strömenden Mediums hintereinander angeordneten Sensoren auswerten. Derartige Messeinrichtungen ermöglichen die Bestimmung der Strömungsgeschwindigkeit eines partikelbeladenen strömenden Mediums, aber auch die Bestimmung der Beladung des strömenden Mediums. So wird beispielsweise in der DE 696 34 249 T2 ein Messsystem beschrieben, mit dem die Geschwindigkeit eines aus Gas und Pulver bestehenden Volumenstromes, das Verhältnis zwischen Gas und Pulver im Volumenstrom und der Turbulenzgrad in der strömenden Pulversuspension durch Auswertung triboelektrischer Effekte an zwei im Volumenstrom angeordneten Fühlelementen bestimmt werden kann. Mit einem deratigen Messsystem ist es möglich, die Menge eines pneumatisch transportierten pulverförmigen Feststoffes in einem pulverbeladenen Gasstrom zu bestimmen. Das Messsystem kann beispielsweise zur Steuerung der einem Prozess zugeführten pulverförmigen Feststoffmenge verwendet werden. Aus der US 4,512,200 A ist ein Verfahren zur Bestimmung der in einer Rohrleitung zu einem Brenner pneumatisch transportierten Kohlenstaubmenge bekannt, bei dem ebenfalls triboelektrische Effekte der Kohlenstaubpartikel an in Strömungsrichtung hintereinander angeordneten Sensoren zur Bestimmung der pneumatisch transportierten Kohlenstaubmenge ausgewertet werden.
Die vorstehend genannten Messsysteme und Verfahren zur Bestimmung der Strömungsgeschwindigkeit und der Beladungen von partikelbeladenen strömenden Medien unter Auswertung triboelektrischer Effekte an in Strömungsrichtung der partikelbeladenen Medien hintereinander angeordneten Sensoren sind grundsätzlich dazu geeignet, die Menge eines im strömenden Medium transportierten partikelförmigen Feststoffes zu bestimmen. Sie werden dazu auch mit hoher Zuverlässigkeit und Präzision angewendet. Sie versagen jedoch bei der Bestimmung des Volumenstromes eines in einem Rohrleitungssystem geförderten Gases ohne Partikelbeladung.

Daher wird In der DE 10 2008 030 650 A1 ein Verfahren zur Steuerung des Brennstoff-Luft-Verhältnisses bei der Verbrennung gemahlener Kohle in einer Kohlekraftwerksfeuerungsanlage, die zur Vorwärmung der Frischluft einen Regenerativ-Luftvorwärmer aufweist, vorgeschlagen, bei dem die Verbrennungsluftmengenmessung und die Tragluftmengenmessung auf der Grundlage der Auswertung triboelektrischer Effekte an in Strömungsrichtung der Luft hintereinander im Luftstrom angeordneten Sensoren nach der Korrelationsmethode erfolgt, wobei in den Luftstrom vor den Sensoren zwischen 0,1 mg bis 10 mg feinkörnige Partikel je m³ Luft eingetragen werden. Bevorzugt erfolgt der Eintrag feinkörniger Partikel in den Luftstrom nur während der Anfahrphase der Kohlekraftwerksfeuerungsanlage, also nur in der Phase in der keine gemahlene Kohle verbrannt wird und somit über den Regenerativ-Luftvorwärmer keine Flugaschepartikel in die Frischluft eingetragen werden. Der Aufwand zum kontinuierlichen Eintrag von feinkörnigen Partikeln während der gesamten Betriebszeit einer Kohlekraftwerksfeuerungsanlage ist zu erheblich. Die in der DE 10 2008 030 650 A1 vorgeschlagene Lösung ist daher auch nur bei Kohlekraftwerksfeuerungsanlagen mit einem Regenarativ-Luftvorwärmer zur Vorwärmung der Frischluft zweckmäßig.
Darüber hinaus hat sich gezeigt, dass die Verbrennungsluftmengenmessung und die Tragluftmengenmessung in einer Kohlekraftwerksfeuerungsanlage auf der Grundlage der Auswertung triboelektrischer Effekte von im Luftstrom geführten triboelektrisch geladenen Partikeln an in Strömungsrichtung der Luft hintereinander im Luftstrom angeordneten Sensoren nach der Korrelationsmethode dann nicht mehr mit ausreichend hoher Messgenauigkeit anwendbar ist, wenn die Partikelbeladung der Luft und/oder die Strömungsgeschwindigkeit des Luftstromes einen kritischen Wert unterschreitet. Die vorgenannten kritschen Werte liegen etwa bei einer Partikelbeladung von 0,1 mg Flugasche/m³ Luft bzw. einer Strömungsgeschwindigkeit von 10 m/s, wobei beide Werte bezüglich einer hohen zu realisierenden Messgenauigkeit derart voneinander abhängen, dass die Partikelbeladung der Luft kleiner sein kann als die angegebenen 0,1 mg Flugasche/m³ Luft, wenn die Strömungsgeschwindigkeit der Luft erheblich größer als 10 m/s ist bzw. umgekehrt, dass die Strömungsgeschwindigkeit der Luft auch unterhalb von 10 m/s liegen kann, wenn die Partikelbeladung der Luft größer als die genannten 0,1 mg Flugasche/m³ Luft ist.

Ziel der Erfindung sind eine Einrichtung und ein Verfahren zur Steuerung des Brennstoff-Luft-Verhältnisses bei der Verbrennung gemahlener Kohle in einer Kohlekraftwerksfeuerungsanlage, mit denen die vorstehend genannten Nachteile beseitigt werden. Insbesondere soll die Verbrennungsluftmengenmessung und die Tragluftmengenmessung in einer Kohlekraftwerksfeuerungsanlage auf der Grundlage der Auswertung gewonnener Signale durch in Strömungsrichtung der Luft hintereinander im Luftstrom angeordneten Sensoren nach der Korrelationsmethode dahingehend verbessert werden, dass sie auch bei Kohlekraftwerksfeuerungsanlagen bzw. bei einer Betriebsweise einer Kohlekraftwerksfeuerungsanlage, bei der keine oder nur eine extrem geringe Beladung der Luft mit Partikeln auftritt und/oder bei der die Strömungsgeschwindigkeit der Luft klein ist, anwendbar ist.

Erfindungsgemäß wird dieses Ziel mit einer Einrichtung gemäß dem 1. Patentanspruch sowie einem Verfahren gemäß dem 9. Patentanspruch erreicht. In den auf den 1. Patentanspruch bezogenen Ansprüchen 2 bis 8 sind vorteilhafte Ausgestaltungen der erfindungsgemäßen Einrichtung beschrieben, in den auf den 9. Patentanspruch bezogenen Ansprüchen 9 bis 16 vorteilhafte Ausgestaltungen des erfindungsgemäßen Verfahrens.

Eine erfindungsgemäße Einrichtung zur Steuerung des Brennstoff-Luft-Verhältnisses bei der Verbrennung gemahlener Kohle in einer Kohlekraftwerksfeuerungsanlage, die Mittel zur pneumatischen Förderung der gemahlenen Kohle zu den Brennern der Kohlekraftwerksfeuerungsanlage sowie Mittel zur Zuführung der Verbrennungsluft zu den Brennern bzw. in den Feuerungsraum der Kohlekraftwerksfeuerungsanlage aufweist, wobei in Strömungsrichtung der Luft mindestens nachfolgende Einrichtungen angeordnet sind,
ein Frischlüfter zum Ansaugen von Frischluft aus der Umgebung, ein Mühlenlüfter zur Förderung eines Teiles der angesaugten Frischluft als Tragluft zur Kohlemühle,
ein Luftvorwärmer zur Vorwärmung der angesaugten Frischluft und eines Teiles der Tragluft unter Nutzung der Rauchgaswärme der Kohlekraftwerksfeuerungsanlage, eine Luftmengensteuereinrichtung zu Steuerung der in den Feuerungsraum eingeleiteten Verbrennungsluftmenge, eine Luftmengensteuereinrichtung zur Steuerung der für die pneumatische Förderung der gemahlenen Kohle zu verwendenden Tragluftmenge sowie Messeinrichtungen zur Messung der in den Feuerungsraum eingeleiteten Verbrennungsluftmenge und der zur pneumatischen Förderung der gemahlenen Kohle zu verwendenden Tragluftmenge und eine Einrichtung zur dosierten Zuführung einer vorgewählten Menge an gemahlener Kohle zu den Brennern und bei der die Luftmengenmessung mittels einer durch elektrostatische Induktion an mindestens zwei im Strömungsquerschnitt des die Luft führenden Kanales, in Strömungsrichtung der Luft hintereinander angeordneten Sensoren erzeugte Signale auswertende Korrelationsmesseinrichtung erfolgt, ist dadurch charakterisiert, dass in Strömungsrichtung der Luft vor den Sensoren in einem Abstand I mit 1 x Lichte Weite des Strömungsquerschnittes des die Luft führenden Kanales < I < 10 x Lichte Weite des Strömungsquerschnittes des die Luft führenden Kanales im Bereich der Sensoren, bevorzugt 3 x Lichte Weite des Strömungsquerschnittes des die Luft führenden Kanales < I < 5 x Lichte Weite des Strömungsquerschnittes des die Luft führenden Kanales im Bereich der Sensoren, im Strömungsquerschnitt des die Luft führenden Kanales eine Elektrode mit einer Elektrodenkontur mit einem mittleren Radius rₘ mit 0,1 mm ≤ rₘ ≤ 1,2 mm angeordnet ist, wobei der Abstand I der Abstand zwischen der Elektrode und in Strömungsrichtung (s) der Luft dem ersten Sensor der beiden hintereinander angeordneten Sensoren ist, dass die zu dieser Elektrode elektrisch wirkende Gegenelektrode mindestens abschnittsweise in Strömungsrichtung der Luft vor den Sensoren angeordnet ist und dass die Elektrode sowie die Gegenelektrode mit den unterschiedlichen Polen einer Hochspannungsquelle mit einer Spannung U von 12 kV ≤ U ≤ 20 kV, bevorzugt 15 kV ≤ U ≤ 17 kV, verbunden sind.
Dabei erfolgt sowohl die Messung der Menge der den Kesseln zugeführten Verbrennungsluft als auch die Messung der Menge der zur pneumatischen Förderung der gemahlenen Kohle nowendigen Tragluft mittels Korrelationsmesseinrichtung, die infolge elektrostatischer Indunktion an im Strömungsquerschnittes des die Luft führenden Kanales in Strömungsrichtung hintereinander positionierten Sensoren erzeugte Signale auswertet. Dazu sind in dem die Verbrennungsluft führenden Kanalsystem und in dem die Tragluft führenden Kanalsystem entsprechende Sensoren angeordnet, die mit Korrelationsmesseinrichtungen elektrisch in Verbindung stehen.
Bevorzugt kann die in dem die Luft führenden Kanal vor den Sensoren im Abstand I angeordnete, mit einer Hochspannungsquelle elektrisch verbundene Elektrode eine oder mehrere Spitzen oder Schneiden mit einer Kontur mit einem mittelren Radius rₘ mit 0,1 mm ≤ rₘ ≤ 1,2 mm aufweisen oder als Draht mit einem mittleren Radius rₘ mit 0,1 mm ≤ rₘ ≤ 1,2 mm ausgebildet sein. Besonders bevorzugt ist besagte Elektrode als ein in den Strömungsquerschnitt ragender Stab ausgebildet, wobei das in den Strömungsquerschnitt ragende Ende der Elektrode etwa bis zur Mitte des Strömungsquerschnittes ragt und mindestens eine Spitze oder Schneide mit einem mittleren Radius rₘ mit 0,1 mm ≤ rₘ ≤ 1,2 mm aufweist.

Ist die Kanalwandung des die Luft führenden Kanales elektrisch leitfähig ausgebildet, kann sie bei einer bevorzugten Ausbildung der Erfindung elektrisch als Gegenelektrode zu der im Strömungsquerschnitt des die Luft führenden Kanales angeordneten Elektrode geschaltet sein.

Bei einer anderen Ausbildung der Erfindung ist die Gegenelektrode als ein elektrisch leitfähiger Stab oder Draht ausgebildet, der den Kanalquerschnitt mindestens zur Hälfte durchspannt und in Strömungsrichtung der Luft nach der Elektrode und vor den Sensoren, d.h. in Strömungsrichtung der Luft zwischen der Elektrode und den Sensoren, angeordnet ist. Selbstverständlich können auch in Strömungsrichtung der Luft zwischen der Elektrode und den Sensoren mehrere Stäbe oder Drähte angeordnet und elektrisch als Gegenelektrode geschaltet sein.
Bevorzugt ist jedoch ein den Kanalquerschnitt vollständig durchspannender Stab oder Draht in Strömungsrichtung der Luft zwischen der Elektrode und den Sensoren angeordnet und elektrisch als Gegenelektrode geschaltet.

Die Elektrode ist bevorzugt gegenüber der Kanalwandung des die Luft führenden Kanales isoliert angeordnet. Sie kann eine oder mehrere Spitzen oder Schneiden mit einer Kontur mit einem mittleren Radius rₘ mit 0,1 mm ≤ rₘ ≤ 1,2 mm aufweisen oder als Draht mit einem mittleren Radius rₘ mit 0,1 mm ≤ rₘ ≤ 1,2 mm ausgebildet sein. Die Elektrode ist bevorzugt elektrisch als Kathode geschaltet. Die Gegenelektrode ist bevorzugt elektrisch auf Massepotenzial geschaltet. Letzteres ist insbesondere dann zweckmäßig, wenn die Kanalwandung elektrisch leitfähig ausgebildet ist und als Gegenelektrode fungiert.

Die Sensoren können elektrisch isoliert gegenüber der im Kanal geführten Luft ausgebildet sein, um Störungen durch einen direkten Ladungsaustausch zwischen den Sensoren und ionisierten Luftmolekülen zu vermeiden.

Es können in Strömumgsrichtung der Luft nach einer im Strömungsquerschnitt des die Luft führenden Kanales angeordneten, mit einer Hochspannungsquelle mit einer Spannung U von 12 kV ≤ U ≤ 20 kV, bevorzugt 15 kV ≤ U ≤ 17 kV, verbundenen besagten Elektrode eine oder mehrere durch elektrostatische Induktion an mindestens zwei im Strömungsquerschnitt des die Luft führenden Kanales, in Strömungsrichtung der Luft hintereinander angeordneten Sensoren erzeugte Signale auswertende Korrelationsmesseinrichtung vorgesehen sein. Mehrere vorgenannte Korrelationsmesseinrichtungen können auch in verschiedenen Zweigen des die Luft führenden Kanalsystems angeordnet sein, wenn die mit einer Hochspannungsquelle mit einer Spannung U von 12 kV ≤ U ≤ 20 kV, bevorzugt 15 kV ≤ U ≤ 17 kV, verbundene Elektrode in Strömungsrichtung vor der Verzweigung im Strömungsquerschnitt des die Luft führenden Kanales angeordnet ist. Wichtig ist, dass der entlang der Luftströmung gemessene Abstand I der Sensoren zu besagter Elektrode <10 x Lichte Weite des Strömungsquerschnittes des die Luft führenden Kanales im Bereich der Sensoren ist.

Das erfindungsgemäße Verfahren basiert auf einer Luftmengenmessung, und zwar der Verbrennungsluftmengenmessung und der Tragluftmengenmessung, anhand der Auswertung elektrischer Signale, die durch elektrostatische Induktion an mindestens zwei im Strömungsquerschnitt des die Luft führenden Kanales, in Strömungsrichtung der Luft hintereinander angeordneten Sensoren erzeugt werden, nach der Korrelationsmessmethode. Es ist dadurch charakterisiert, dass in Strömungsrichtung der Luft vor den Sensoren mindestens ein Teil des Luftstromes der Wirkung einer eine Spannung U von 12 kV ≤ U ≤ 20 kV, bevorzugt 15 kV ≤ U ≤ 17 kV, führenden Elektrode mit einer Elektrodenkontur mit einem mittleren Radius rₘ mit 0,1 mm ≤ rₘ ≤ 1,2 mm ausgesetzt und dadurch ionisiert wird und die Sensoren jedoch nicht der Wirkung des durch die Spannung U angetriebenen, zwischen der Elektrode und der Gegenelektrode fließenden Ionenstromes ausgesetzt sind.
Bevorzugt führt die Elektrode eine negative Stannung ist also kathodisch geschaltet.

Die ionisierten Luftmoleküle, die als Ionenstrom vom elektrischen Feld E̅ von der Elektrode zur Gegenelektrode fließen, treten in Wechselwirkung mit anderen Molekülen des Luftstromes, wodurch die Moleküle des Luftstromes elektrisch so beeinflusst werden, dass beim Vorbeiströmen des Luftstromes an den Sensoren von den elektrisch beeinflussten Molekülen des Luftstromes durch elektrostatische Induktion in den Sensoren elektrische Signale erzeugt werden, die mittels einer Korrelationsmesseinrichtung sicher ausgewertet werden können.
Dabei ist es von besonderer Bedeutung, dass die Sensoren nicht der direkten Wirkung des Ionenstromes zwischen der Elektrode und der Gegenelektrode ausgesetzt sind. Sie sind in einer solchen Entfernung zur Elektrode positioniert, das die Wirkung des sich zwischen der Elektrode und der Gegenelektrode herausbildenden elektrischen Feldes E̅ nur noch unerheblich ist, d.h. die elektrischer Felstärken < 0,3 V/m ist.

Der Luftstrom kann der Wirkung einer konstanten negativen Spannung U an der Elektrode augesetzt werden oder auch einer zeitlich veränderlich Spannung U mit Maximalwerten zwischen 12 kV ≤ U ≤ 20 kV, bevorzugt 15 kV ≤ U ≤ 17 kV. Besonders zweckmäßig ist die Wirkung einer gepulsten Spannung U mit Maximalwerten zwischen 12 kV ≤ U ≤ 20 kV, bevorzugt 15 kV ≤ U ≤ 17 kV, und einer Impulsdauer von ca.1 ms.

Es wurde gefunden, dass im Fall einer veränderlichen Spannung U, insbesondere einer gepulsten Spannung U die Korrelationsmessung nicht nur anhand der Auswertung stochastischer Signaturen der durch elektrostatische Induktion an den Sensoren erzeugten elektrischen Signale durchgeführt werden kann, sondern es kann außerdem die zeitliche Funktion der Veränderung der elektrischen Spannung U und damit die zeitliche Veränderung der Wirkung dieser Spannung U auf die Moleküle des Luftstromes zur Bestimmung der Strömungsgeschwindigkeit der Luft und damit zur Luftmengenmessung ausgewertet werden.
Bei einer besonders bevorzugten Ausgestaltung des Verfahrens wird der Luftstrom einer periodisch wiederkehrenden Impulsfolge mit einer eine Anzahl von n Impulse einer Spannung U mit Maximalwerten zwischen 12 kV ≤ U ≤ 20 kV, bevorzugt 15 kV ≤ U ≤ 17 kV, und einer Impulsdauer von ca. 1 ms ausgesetzt, wobei 2 ≤ n ≤ 10 ist, und wobei die Impulsfolge von n Impulsen sich periodisch mit einer Periodendauer zwischen 0,2 s bis 3,0 s, bevorzugt zwischen 1,0 s bis 1,5 s, wiederholt.

Eine besonders zweckmäßige Ausgestaltung des Verfahrens mit einer gepulsten Spannung zwischen der Elektrode und der Gegenelektrode besteht darin, die Auswertung der durch elektrostatische Induktion erzeugten Signale nach der Korrelationsmessmethode zeitversetzt zu den Impulsen der Spannung U, die die Elketrode führt, durchzuführen. Bevorzugt mit einem Zeitversatz zwischen 5 ms bis 150 ms, besonders bevorzugt mit einem Zeitversatz zwischen 8 ms bis 70 ms. Dadurch wird erreicht, dass von schnellveränderlichen elektromagnetischen Feldern, die von den Spannungsimpulsen herrühren, in den Sensoren generierte Signale - Störsignale - nicht in die Auswertung der vom Luftstrom an den Sensoren durch elektrostatische Induktion erzeugten Signale einfließen.

Das erfindungsgemäße Verfahren ermöglicht auch bei vergleichsweise kleinen Strömungsgeschwindigkeiten der Luft zwischen 2 m/s bis 10 m/s, sehr genaue Luftmengenmessungen.

Im Fall, dass die Kohlekraftwerksfeuerungsanlge einen Regenerativ-Luftvorwärmer aufweist, muss die Elektrode nur dann eine Spannung U führen, wenn kein Eintrag gemahlener Kohle in die Tragluft erfolgt und somit über den Regenerativ-Luftvorwärmer keine Flugaschepartikel in die Frischluft eingetragen werden oder die Strömungsgeschwindigkeit der Luft im Bereich der Sensoren vergleichsweise klein ist. In diesem Fall kann die Luftmengenmessung während der Befeuerung der Kohlekraftwerksfeuerungsanlage mit gemahlener Kohle sowie bei hoher Strömungsgeschwindigkeit der Luft im Bereich der Sensoren nach der Korrelationsmessmethode durch Auswertung der Signaturen der Signale, die durch triboelektrische Effekte an den in den Luftstrom eingetragenen Flugaschepartikeln erzeugten elektrischen Ladungsträger bewirkt werden, erfolgen. Nur wenn keine oder nur sehr wenige Flugaschepartikel im Luftstrom vorhanden sind und/oder die Strömungsgeschwindigkeit der Luft kleiner als 10 m/s ist, ist es erforderlich, dass besagte Elektrode eine Spanung U wie beschrieben, führt.

Es kann im vorstehend beschriebenen Fall zweckmäßig sein, wenn besagte Elektrode nur von Zeit zu Zeit eine Spannung U wie beschrieben führt, um die dadurch erzielten Ergebnisse der Luftmengenmessung zur Überprüfung der durch Auswertung der Signaturen der Signale, die durch triboelektrische Effekte an den in den Luftstrom eingetragenen Flugaschepartikeln erzeugten elektrischen Ladungsträger bewirkt werden, durchgeführten Luftmengenmessungen nach der Korrelationsmessmethode zu verwenden.

Ein besonderer Vorteil der Erfindung liegt auch darin, dass nach der Korrelationsmessmethode direkt die Geschwindigkeit der Luftströmung gemessen wird, weil die Erzeugung der Signale an den Sensoren durch elektrostatische Influenz direkt durch Moleküle des Luftstromes bewirkt wird, während bei vergleichbaren Verfahren des Standes der Technik Signaturen von Signalen nach der Korrelationsmessmethode ausgewertet werden, die von im Luftstrom geführten Partikeln, nämlich Flugaschepartikeln, erzeugt werden. Naturgemäß kann die Bewegungsgeschwindigkeit der Partikel einen Schlupf zur Strömungsgeschwindigkeit des Luftstromes, der die Partikel führt, aufweisen, der zu einer Verfälschung der Messergebnisse führt. Der vorgenannte Schlupf kann um so größer sein, je kleiner die Strömungsgeschwindigkeit des Luftstromes ist und je größer die Partikel sind.

Die erfindungsgemäße Einrichtung und das erfindungsgemäße Verfahren ermöglichen eine störungs- und wartungsfreie Steuerung des Brennstoff-Luft-Verhältnisses in einer Kohlekraftwerksfeuerungsanlage und damit des Verbrennungsprozesses mit hoher Zuverlässigkeit, Präzision und Langzeitkonstanz der Genauigkeit der Luftmengenmessung.

Die Erfindung soll nachfolgend anhand eines Ausführungsbeispieles näher erläutert werden. Die zugehörigen Zeichnungen zeigen in
- Figur 1:: ein vereinfachtes Blockschaltbild einer Kohlekraftwerksfeuerungsanlage, in
- Figur 2:: die Anordnung einer mit einer Hochspannungsquelle verbundenen Elektrode sowie mit einer Korrelationsmesseinrichtung verbundener Sensoren in einem Verbrennungsluft führenden Kanal, in
- Figur 3:: die Ausbildung einer Elektrodenspitze einer mit einer Hochspannungsquelle verbundenen Elektrode, in
- Figur 4:: zeitliche Verläufe der auf die Elektrode geschalteten Hochspannung, in
- Figur 5:: einen weiteren Verlauf der auf die Elektrode geschalteten Hochspannung, in
- Figur 6:: eine andere Anordnung einer mit einer Hochspannungsquelle verbundenen Elektrode mit korrespondierender als Stab ausgebildeter Gegenelektrode sowie mit einer Korrelationsmesseinrichtung verbundener Sensoren in einem Verbrennungsluft führenden Kanal, in
- Figur 7:: eine andere Ausbildung der Elektrodenspitze der mit einer Hochspannungsquelle verbundenen Elektrode, in
- Figur 8:: die Anordnung einer mit einer Hochspannungsquelle verbundenen Elektrode sowie Sensoren von zwei Korrelationsmesseinrichtungen nach einer Verzweigung des die Verbrennungsluft führenden Kanales und in
- Figur 9:: den zeitlichen Verlauf einer Luftmengenmessung in einer Kraftwerksfeuerungsanlage.

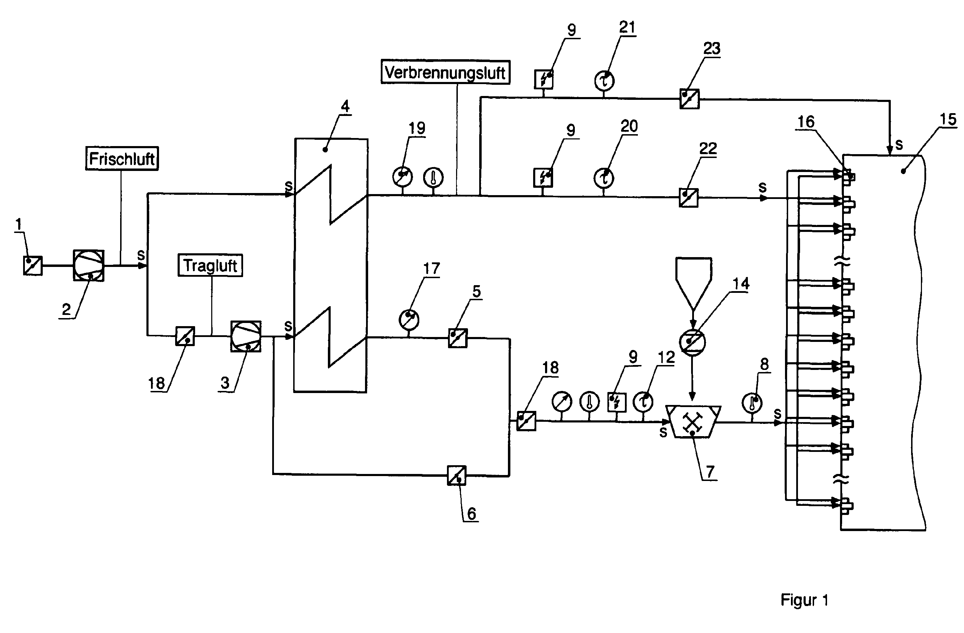

Das in Figur 1 gezeigte vereinfachte Blockschaltbild einer Kohlekraftwerksfeuerungsanlage zeigt beginnend mit dem Ansaugen der Frischluft eine Frischluftklappe 1 in Strömungsrichtung s der Luft gefolgt von einem Frischlüfter 2. Nach dem Frischlüfter 2 wird von der angesaugten Frischluft die Tragluft abgezweigt. Diese wird durch einen Mühlenlüfter 3 weitergefördert, und zwar zu einem Teil zu einem Regenerativ-Luftvorwärmer 4. Im Regenerativ-Luftvorwärmer 4 wird im stationären Betrieb der Kohlekraftwerksfeuerungsanlage ein Teil der Tragluft erwärmt. Ein anderer Teil der Tragluft wird kalt weitergeführt. Beide Teile der Tragluft werden über die Heißluftklappe 5 sowie die Kaltluftklappe 6 dosiert zusammengeführt, und zwar zu solchen Mengenanteilen, dass die Temperatur des Tragluft-Kohle-Gemisches nach der Beladung mit feingemahlener Kohle innerhalb vorgewählter Grenzwerte liegt. Die Temperatur der Tragluft wird durch die hinter der Kohlemühle 7 angeordnete Temperaturmesseinrichtung 8 erfasst. Vor der Kohlemühle 7 sind im Strömungsquerschnitt des die Tragluft führenden Kanales eine mit einer Hochspannungsquelle 9 verbundene Elektrode 10 und in Strömungsrichtung s der Tragluft nachfolgend zwei Sensoren 11 angeordnet, die mit einer Tragluftmengenmesseinrichtung 12 verbunden sind. Diese Sensoren 11 sind als paarweise in Strömungsrichtung s der Tragluft hintereinander angeordnete, in den Tragluftstrom ragende Messstäbe ausgeführt.
Die Tragluftmengenmesseinrichtung 10 ist als Korrelationsmesseinrichtung ausgeführt, die die infolge elektrostatischer Induktion durch an den Sensoren 11 vorbeiströmenden elektrisch geladenen Teilchen erzeugten Signale auswertet und so die Strömungsgeschwindigkeit der Tragluft misst. Anhand der Querschnittsfläche des die Tragluft führenden Kanales im Bereich der angeordneten Sensoren 11 sowie der Temperatur der Tragluft und des statischen Druckes der Tragluft im Bereich der angeordneten Sensoren 11 wird die Tragluftmenge bestimmt. Die Sensoren 11 sind in Strömungsrichtung s der Tragluft in einem Abstand I, mit I ≈ 4 x Lichte Weite des Strömungsquerschnittes der Kanales im Bereich der Sensoren 11, zur Elektrode 10 angeordnet. Die Wandung 13 des die Tragluft führende Kanales ist elektrisch leitfähig ausgebildet und auf Massepotenzial geschaltet. Die Elektrode 10 und die Sensoren 11 sind gegenüber der Wandung 13 des Kanales elektrisch isoliert angeordnet. Der Kohlemühle 7 wird entsprechend der von der Kraftwerksfeuerungsanlage abgeforderten Last über eine Dosiereinrichtung 14 dosiert Kohle aufgegeben. Die mit gemahlener Kohle beladene Tragluft wird den in einem Feuerungsraum 15 angeordneten Brennern 16 zugeleitet. Dies kann je nach Ausführung der Kohlekraftwerksfeuerungsanlage einzelbrennerbezogen oder brennergruppenweise oder zu allen Brennern 16 eines Feuerungsraumes 15 gemeinsam erfolgen. In Strömungsrichtung s der Tragluft nach dem Regenerativ-Luftvorwärmer 4 ist eine Druckmesseinrichtung 17 zu Erfassung des statischen Druckes der Tragluft angeordnet. Außerdem sind im Tragluftstrom Sicherheitsklappen 18 angeordnet, die während der Anfahrphase der Kohlekraftwerksfeuerungsanlage, d.h. wenn keine gemahlene Kohle zu den Brennern 16 gefördert wird, geschlossen sind.
Der Hauptteil der angesaugten Frischluft wird nach dem Frischlüfter 2 als Verbrennungsluft dem Regenerativ-Luftvorwärmer 4 zugeführt. Der statische Druck der erhitzten Verbrennungsluft wird mittels einer statischen Druckmesseinrichtung 19 erfasst. Mittels der Druckmesseinrichtungen 17 und 19 erfolgt die Steuerung des Frischlüfters 2. Die erhitzte Verbrennungsluft wird zu einem Teil direkt zu den Brennern 16 geleitet und zu einem anderen Teil in den Feuerungsraum 15 geführt. Beide Mengenteile der Verbrennungsluft werden durch die Verbrennungsluftmengenmesseinrichtungen 20 und 21 erfasst. Dazu sind in den jeweiligen die Verbrennungsluft führenden Kanälen Sensoren 11 angeordnet, die jeweils mit den Verbrennungsluftmesseinrichtungen 20 und 21 verbunden sind. Vor den Sensoren 11 der Verbrennungsluftmengenmesseinrichtungen 20 und 21 sind im Strömungsquerschnitt der die Verbrennungsluft führenden Kanäle je eine mit einer Hochspannungsquelle 9 verbundene Elektrode 10 angeordnet. Die Sensoren 11 sind analog zur Tragluftmengenmessung in Strömungsrichtung s der Verbrennungsluft in einem Abstand I, mit I ≈ 20 x Lichte Weite des Strömungsquerschnittes der Kanales im Bereich der Sensoren 11, zur Elektrode 10 angeordnet.
Die Verbrennungsluftmengenmesseinrichtungen 20 und 21 sind ebenso wie die Tragluftmengenmesseinrichtung 12 als Korrelationsmesseinrichtung ausgeführt, die die infolge elektrostatischer Induktion durch an den Sensoren 11 vorbeiströmenden elektrisch geladenen Teilchen erzeugten Signale auswertet und so die Strömungsgeschwindigkeit der Verbrennungsluft misst. Unter Einbeziehung der Querschnittsfläche des die Verbrennungsluft führenden Kanales sowie der Temperatur der Verbrennungsluft und des statischen Druckes der Verbrennungsluft im Bereich der angeordneten Sensoren 11 wird die Verbrennungsluftmenge ermittelt.
Die Steuerung der den Brennern 16 sowie dem Feuerungsraum 15 zugeführten Verbrennungsluftmenge zur Erreichung eines für eine vorgegebene Stöchiometrie der Verbrennung erforderlichen Brennstoff-Luft-Verhältnisses bei entsprechend der von der Kraftwerksfeuerungsanlage abgeforderten Last vorbestimmter Menge an den Brennern 16 zugeführter gemahlener Kohle erfolgt mittels der Verbrennungsluftsteuerklappen 22 und 23.
Ja nach Größe bzw. Leistung der Kohlekraftwerksfeuerungsanlage können alle vorbenannten Baugruppen und Einrichtungen mehrfach vorhanden sein und parallel arbeiten. Im Sinne der Übersichtlichkeit des vereinfachten Blockschaltbildes sind die Baugruppen und Einrichtungen jeweils nur einfach dargestellt. Die prinzipielle Funktionsweise der Kohlekraftwerksfeuerungsanlage wird, soweit es die Erfindung betrifft, davon nicht berührt.

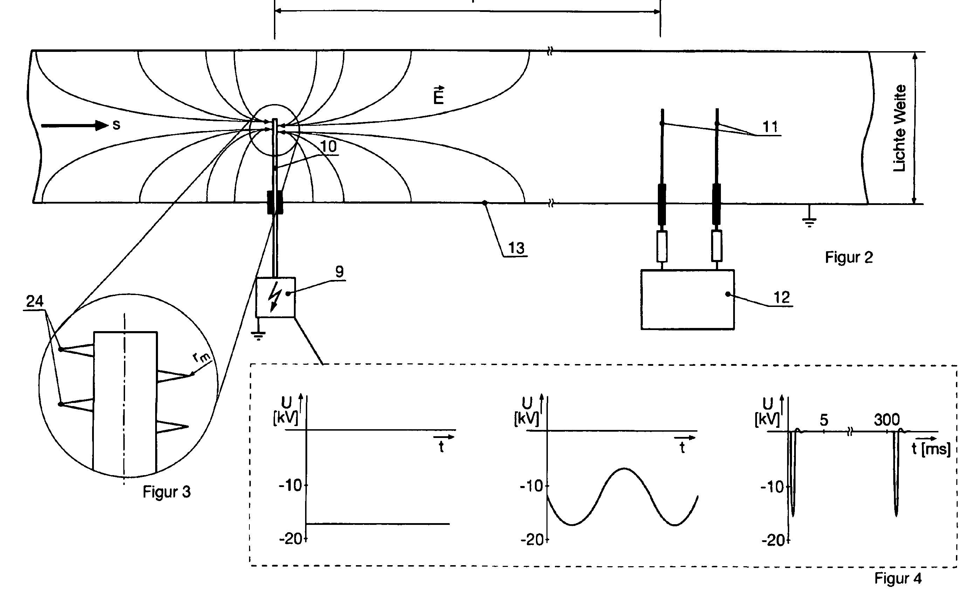

Figur 2 zeigt die Anordnung einer mit einer Hochspannungsquelle 9 verbundenen Elektrode 10 sowie von zwei mit einer Korrelationsmesseinrichtung 12 verbundener Sensoren 11 im Strömungsquerschnitt eines Verbrennungsluft führenden Kanales. Zur Tragluftmengenmessung erfolgt die Anordnung von Elektrode 10 und Sensoren 11 im Strömungsquerschnitt des die Tragluft führenden Kanales in analoger Weise.
Die Elektrode 10 ist gegenüber der elektrisch als Gegenelektrode zur Elektrode 10 funfierenden elektrisch leitfähigen und auf Massepotenzial geschalteten Wandung 13 des die Verbrennungsluft führenden Kanales elektrisch isoliert angeordnet. Sie ist als ein etwa bis zur Mitte des Strömungsquerschnittes in den Kanal ragender metallischer Rundstab mit einem Stabdurchmesser von ca. 12 mm ausgebildet. An dem etwa in der Mitte des Strömungsquerschnittes befindlichen Ende der Elektrode 10 sind, wie in Figur 3 gezeigt, metallische Spitzen 24 mit einem mittleren Radius rₘ der Spitze 24 von rₘ = 0,4 mm angeordnet. Die Spitzen 24 sind aus Stahlblech einer Stärke von 1 mm gefertigt und in einen in den Rundstab eingearbeiteten Schlitz eingeschoben und mit dem Rundstab elektrisch leitend verbunden. Die Elektrode ist elektrisch mit einer Hochspannungsquelle 9 verbunden. Sie ist gegenüber der als Gegenelektrode fungierenden Wandung 13 des Kanales als Kathode geschaltet. Bei dieser Anordnung und Ausbildung der Elektrode 10 und der als Gegenelektrode fungierenden Kanalwandung 13 wird das elektrische Feld E̅ zwischen beiden Elektroden die dargestellte Ausbildung haben.
In Strömungsrichtung s der Verbrennungsluft sind in einem Abstand I = 4 x Lichte Weite des Kanalquerschnittes zur Position der Elektrode 10 in Strömungsrichtung hintereinander zwei Sensoren 11 angeordnet. Die Sensoren 11 sind als in den Strömungsquerschnitt etwa bis zur Mitte des Strömungsquerschnittes ragende Messstäbe ausgeführt. Dabei bezieht sich der Abstand I auf den Abstand zwischen der Elektrode 10 und in Strömungsrichtung s der Luft dem ersten Sensor 11 der beiden hintereinander angeordneten Sensoren 11. Die beiden Sensoren 11 sind in Strömungsrichtung s der Luft in einem Abstand von ca. 350 mm zueinander angeordnet. Der Abstand der Sensoren 11 in Strömungsrichtung s der Luft zueinander kann zwischen 200 mm bis 1000 mm betragen.
Zu beachten ist, dass die Sensoren 11 in einer Entfernung zur Elektrode 10 positioniert sind, in der die Wirkung des sich zwischen der Elektrode 10 und der als Gegenelektrode fungierenden Kanalwandung 13 herausbildenden elektrischen Feldes E̅ nur noch unerheblich ist, d.h. die elektrischer Felstärken < 0,3 V/m ist.
Die Sensoren 11 sind ebenfalls gegnüber der auf Massepotenzial geschalteten und als Gegenelektrode fungierenden Wandung 13 des die Verbrennungsluft führenden Kanales elektrisch isoliert angeordnet. Die Sensoren 11 sind elektrisch mit einer Korrelationsmesseinrichtung 12 verbunden.

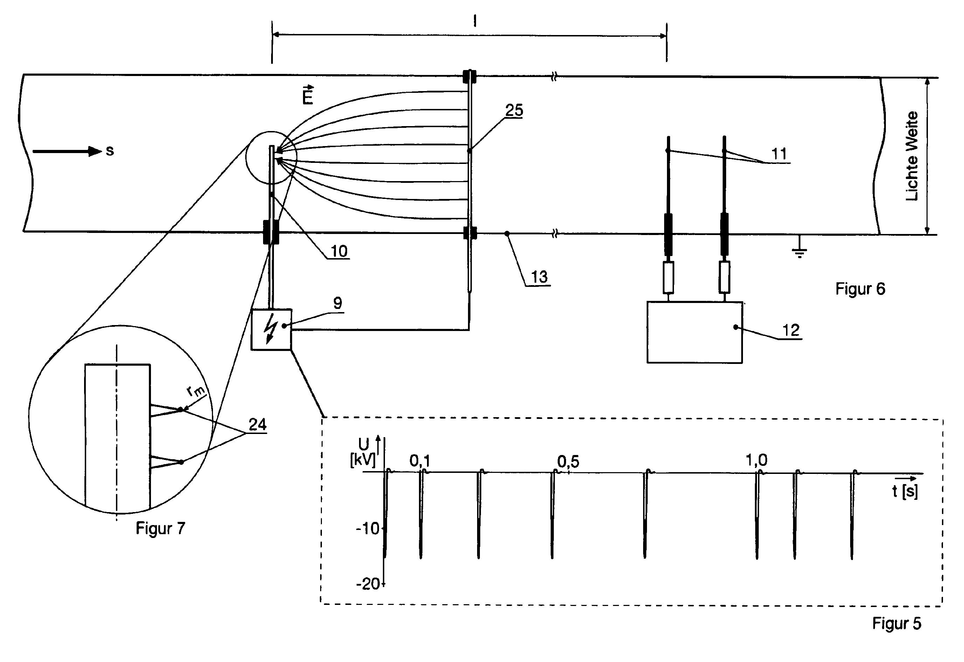

Figuren 4 und 5 zeigen zeigt beispielhaft mögliche zeitliche Verläufe der von der Hochspannungsquelle 9 bereitgestellten Spannung U. Dies sind in Figur 4 eine Gleichspannung von ca. -16 kV, eine veränderliche Spannung mit Spitzenwerten von ca. -16 kV bzw. eine gepulste Spannung mit Spannungsimpulsen einer Impulsdauer von ca. 1ms im zeitlichen Abstand von ca. 300 ms und in Figur 5 eine periodisch wiederkehrende Folge von 5 Impulsen einer Spannung U mit Spitzenwerten von ca. -16 kV und einer Impulsdauer von ca. 1ms und einer Periodendauer der Folge von Spannungsimpulsen von 1,0 s. Dabei ist der Abstand der 5 Impulse innerhalb der Folge nicht konstant, sondern er steigt von zunächst 0,1 s zwischen dem 1. und 2. Spannungimpuls, 0,15 s zwischen dem 2. und 3. Spannungimpuls, 0,2 s zwischen dem 3. und 4. Spannungimpuls auf schließlich 0,25 s zwischen dem 4. und 5. Spannungsimpuls an.

Es wurde gefunden, dass mit derartigen periodisch wiederkehrenden Folgen von Spannungsimpulsen besonders gute Messergebnisse erzielt werden können.

Figur 6 zeigt eine andere Anordnung einer Elektrode 10, einer elektrisch mit dieser Elektrode 10 korrespondierenden stabförmig ausgebildeten Gegenelektrode 25 sowie zweier mit einer Korrelationsmesseinrichtung 12 verbundener Sensoren 11 im Strömungsquerschnitt eines Verbrennungsluft führenden Kanales. Die Gegenelektrode 25 ist den Strömungsquerschnitt des die Verbrennungsluft führenden Kanales vollständig durchspannend ausgebildet und angeordnet. Sie ist in Strömungsrichtung s der Verbrennungsluft zwischen der Elektrode 10 und den Sensoren 11, oder genauer der Elektrode 10 und dem in Strömungsrichtung s der Vebrennungsluft ersten Sensor 11 der beiden Sensoren, positioniert und gegenüber der Wandung 13 des die Verbrennungsluft führenden Kanales elektrisch isoliert angeordnet. Die Elektrode 10 und die Gegenelektrode 25 sind elektrisch mit den beiden Polen der Hochspannungsquelle 9 verbunden. Bei Anlegen einer Spannung bzw. eines Spannungsimulses wird zwischen der Elektrode 10 und der Gegenelektrode 25 ein elektrisches Feld E̅, wie in Figur 6 gezeigt, ausgebilden. Die Sensoren 11 sind in einer solchen Entfernung zur Elektrode 10 positioniert, das die Wirkung des sich zwischen der Elektrode 10 und der Gegenelektrode 25 herausbildenden elektrischen Feldes E̅ nur noch unerheblich ist, d.h. die elektrischer Felstärken < 0,3 V/m ist.

Figur 7 zeigt die Ausbildung des etwa in der Mitte des Strömungsquerschnittes befindlichen Endes der Elektrode 10. An besagtem Ende der Elektrode 10 sind in Richtung der Gegenelektrode 25 weisende Spitzen 24 ausgebildet.

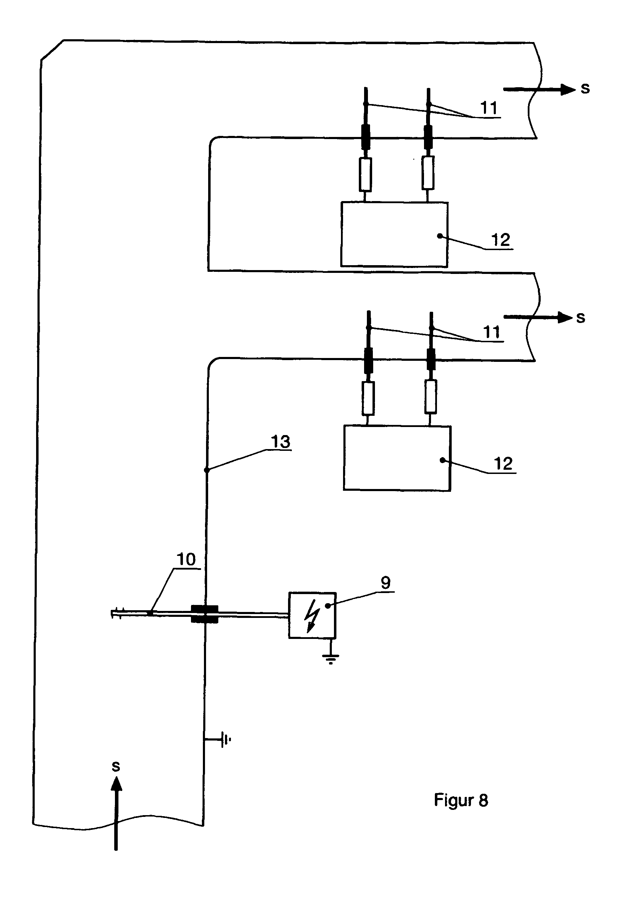

Figur 8 zeigt die Anordnung einer mit einer Hochspannungsquelle 9 verbundenen Elektrode 10 sowie von zwei aus jeweils zwei Sensoren 11 bestehenden Sensorgruppen, die jeweils mit einer Korrelationsmesseinrichtung 12.1 und 12.2 elektrisch verbunden sind, nach einer Verzweigung des die Verbrennungsluft führenden Kanales. Die zu den Figuren 2 bzw. 6 beschriebenen Merkmale der Anordnung der Elektrode 10 sowie der Sensoren 11 treffen analog zu, jedoch mit dem Unterschied, dass in Strömungsrichtung s der Verbrennungsluft nach der Elektrode 10 eine Verzweigung des die Verbrennungsluft führenden Kanales erfolgt und in jedem Kanalzweig je eine mit einer Korrelationsmesseinrichtung 12.1 bzw. 12.2 elektrisch verbundene Gruppe von je zwei Sensoren 11 angeordnet ist. In Strömungsrichtung s der Verbrennungsluft beträgt der Abstand I zwischen der Elektrode 10 zu den Sensoren 11 bei den mit der Korrelationsmesseinrichtung 12.1 elektrisch verbundenen Sensoren 11 I ≈ 4 x Lichte Weite des Kanalquerschnittes im Bereich der Sensoren 11 und bei den mit der Korrelationsmesseinrichtung 12.2 elektrisch verbundenen Sensoren 11 I ≈ 8 x Lichte Weite des Kanalquerschnittes im Bereich der Sensoren 11.

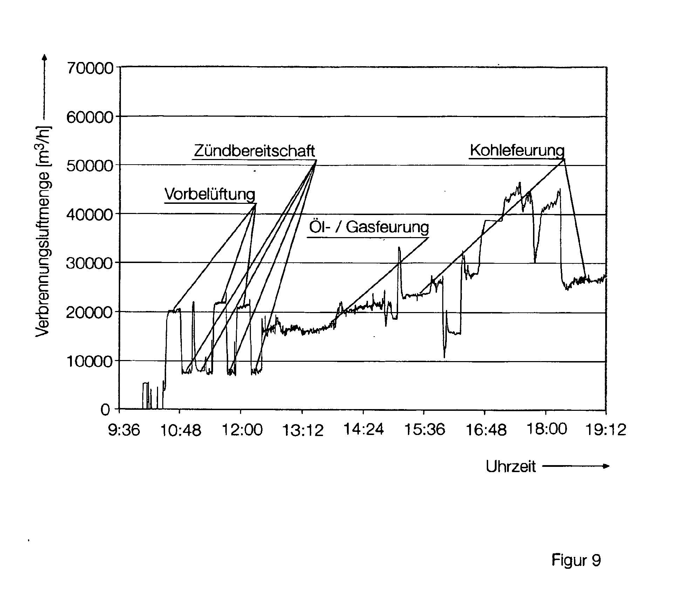

Figur 9 zeigt den zeitlichen Verlauf der einem Brenner 16 oder einer Gruppe von Brennern 16 zugeführten Verbrennungsluftmenge während der Anfahrphase einer Kohlekraftwerksfeuerungsanlage.
Zunächst erfolgt eine Vorbelüftung des Feuerungsraumes 15. Die Verbrennungsluftsteuerklappen 22 und 23 sind vollständig geöffnet, während die Sicherheitsklappen 18 in der Tragluftführung geschlossen sind. Es wird ausschließlich Verbrennungsluft in den Feuerungsraum 12 geleitet. Die Steuerung des Frischlüfters 2 erfolgt in Abhängigkeit des mittels der statischen Druckmesseinrichtung 19 gemessenen Druckes der Verbrennungsluft. Zunächst wird soviel Verbrennungsluft in den Feuerungsraum 15 eingeblasen, dass ein mehrfacher Austausch (mindestens 3fach) der Luftmenge im Feuerungsraum 15 stattfindet, um Brennstoffreste aus dem Feuerungsraum 15 zu entfernen und Verpuffungen zu vermeiden. Nach dem mehrfachen Austausch der Luftmenge im Feuerungsraum 15 wird Zündbereitschaft für im Feuerungsraum 15 angeordnete in Figur 1 nicht dargestellte Öl- oder Gasbrenner hergestellt. Mit Beginn der Zündbereitschaft erfolgt eine Steuerung der Verbrennungsluftmenge in Abhängigkeit der für den Zündvorgang zugeführten Brennstoffmenge (Öl oder Gas). Die Hochspannungsquellen 9 generieren Folgen von Hochspannungsimpulsen mit denen die Elektroden 10 beaufschlagt werden, wobei die Elektroden 10 kathodisch gegenüber den als Gegeneleketrode fungierenden Wandungen 13 der die Verbrennungsluft führenden Kanäle geschaltet sind. Die Hochspannungsimpulse haben eine Imulsbreite von 1 ms, Maximalwerte der Spannung U von U = -16 kV. Mittels der Verbrennungsluftmengenmesseinrichtungen 20 und 21 wird die Verbrennungsluftmenge gemessen und über die Verbrennungsluftsteuerklappen 22 und 23 die den Brennern 16 bzw. dem Feuerungsraum 15 zugeführte Verbrennungsluftmenge gesteuert. Die Öl- bzw. Gasbefeuerung des Kohlekraftwerksfeuerungsanlage wird so lange fortgesetzt, bis eine ausreichende Vorwärmung des Verbrennungsraumes 15 und des Regenerativ-Luftvorwärmers 4 erreicht ist. Während der Zeit der Öl- bzw. Gasbefeuerung werden die Elektroden 10 mit Hochspannungsimpulsen beaufschlagt, um Wolken ionisierter Luftmoleküle im Verbrennungsluftstrom zu erzeugen. Diese Wolken ionisierter Luftmoleküle werden im elektrischen Feld E̅, das sich zwischen der Elektrode 10 und der Gegenelektrode ausbildet, als Ionenstrom zur Gegenelektrode geleitet. Dabei kommt es zu einer Wechselwirkung zwischen den vorgenannten ionisierten Luftmolekülen und anderen Molekülen des Verbrennungsluftstromes. Infolge dieser Wechselwirkung werden Moleküle des Verbrennungsluftstromes elektrisch so beeinflusst, dass bei ihrem Vorbeiströmen an den Sensoren 11 infolge elektrostatischer Induktion Signale erzeugt werden, aus denen durch Auswertung nach der Korrelationsmessmethode die jeweilige Strömungsgeschwindigkeit der Verbrennungsluft ermittelt werden kann. Anhand der Strömungsgeschwindigkeit der Verbrennungsluft wird dann unter Einbeziehung der Querschnittsfläche des die Verbrennungsluft führenden Kanales sowie der Temperatur der Verbrennungsluft und des statischen Druckes der Verbrennungsluft im Bereich der angeordneten Sensoren 11 die jeweilige Verbrennungsluftmenge berechnet. Wichtig ist, dass die Sensoren 11 nicht der direkten Wirkung des Ionenstromes zwischen der Elektrode 10 und der Gegenelektrode 13, 25 ausgesetzt sind, weil Signale die infolge des vom elektrischen Feld E̅ geführten Ionenstromes an den Sensoren 11 erzeugt werden würden, nach der Korrelationsmessmethode, die in gleicher Weise zur Auswertung von an den Sensoren 11 erzeugten Signalen, die, wie nachstehend noch beschrieben, von an den Sensoren vorbeiströmenden durch triboelektrische Effekte elektrisch aufgeladenen Teilchen infolge elektrostatischer Induktion erzeugt werden, nicht auswertbar sind.

Mit Erreichen einer ausreichenden Vorwärmung des Feuerungsraumes 15 beginnt der Eintrag gemahlener Kohle in den Feuerungsraum 15. Dazu wird über den Mühlenlüfter 3 und Öffnen der Sicherheitsklappen 18 der Tragsluftstrom gestartet und die Kohlemühle 7 dosiert mit Kohle beschickt. Die Tragluft wird mit gemahlener Kohle beladen. Die gemahlene Kohle entzündet sich an den noch im Betrieb befindlichen Öl- bzw. Gasbrennern.
Mit Beginn des Kohleeintrages in den Feuerungsraum 15 und der Zündung der Kohleverbrennung kann die Beaufschlagung der Elektroden 10 mit Hochspannungsimpulsen beendet werden, weil in die Verbrennungsluft und die Tragluft über den Regenerativ-Luftvorwärmer 4 eine ausreichende Menge an Aschepartikeln eingetragen werden, die durch triboelektrische Effekte elektrisch aufgeladen werden und beim Vorbeiströmen an den Sensoren 11 infolge elektrostatischer Induktion Signale erzeugen die nach der Korrelationsmessmethode auswertbar sind. Ungeachtet dessen können im Abstand von ca. 30 Minuten, bei Bedarf auch in kürzeren Abständen, die Elektroden 10 mit Hochspannungsimpulsen beaufschlagt werden, um zur Überprüfung der Messgenauigkeit der Einrichtung Messungen durchzuführen, die sowohl auf der Basis von Signalen, die von an den Sensoren 11 vorbeiströmenden durch triboelektrische Effekte aufgeladene Aschepartikeln als auch von ionisierten Luftmolekülen durch elektrostatische Induktion erzeugt werden. Dies emöglicht eine erheblich genauere Messung der Strömungsgeschwindigkeit der Verbrennungsluft bzw. der Tragluft, woraus eine erheblich genauere Verbrennungsluftmengen- und Traglüftmengenmessung resultiert, wodurch schließlich eine erheblich präzisere Steuerung des Brennstoff-Luft-Verhältnisses bei der Verbrennung gemahlener Kohle in einer Kohlekraftwerksfeuerungsanlage erfolgen kann.

Sinkt jedoch die Strömungsgeschwindigkeit der Verbrennungsluft oder der Tragluft unter einen Wert von 10 m/s, sollten die Elektroden 10 mit entsprechenden Hochspannungsimpulsen beaufschlagt werden, weil sich dann die Messgenauigkeit der Verbrennungsluftmenegnmessung bzw. der Tragluftmengenmessung nach der Korrelationsmessmethode durch Auswertung der von ausschließlich durch triboelektrische Effekte elektrisch aufgeladenen Teilchen an den Sensoren 11 erzeugten Signalen erheblich verschlechtert.

### Liste der Bezugszeichen

- 1: - Frischluftklappe
- 2: - Frischlüfter
- 3: - Mühlenlüfter
- 4: - Regenerativ-Luftvorwärmer
- 5: - Heißluftklappe
- 6: - Kaltluftklappe
- 7: - Kohlemühle
- 8: - Temperaturmesseinrichtung
- 9: - Hochspannungsquelle
- 10: - Elektrode
- 11: - Sensor
- 12: - Korrelationsmesseinrichtung
- 12.1: - Korrelationsmesseinrichtung
- 12.2: - Korrelationsmesseinrichtung
- 13: - Wandung des Kanales
- 14: - Dosiereinrichtung
- 15: - Feuerungsraum
- 16: - Brenner
- 17: - Druckmesseinrichtung zur Messung des statischen Druckes der Tragluft
- 18: - Sicherheitsklappe im Tragluftstrom
- 19: - Druckmesseinrichtung zur Messung des statischen Druckes der Verbrennungsluft
- 20: - Verbrennungsluftmengenmesseinrichtung
- 21: - Verbrennungsluftmengenmesseinrichtung
- 22: - Verbrennungsluftsteuerklappe
- 23: - Verbrennungsluftsteuerklappe
- 24: - Spitze der bzw. an der Elektrode 10
- 25: - Gegenelektrode
- E̅: - Elektrisches Feld
- l: - Abstand
- n: - Anzahl von Impulsen einer Spannung U
- rₘ: - mittleren Radius der Spitze
- s: - Strömungsrichtung
- U: - Spannung

## Patentansprüche

1. Kohlekraftwerksfeuerungsanlage mit einer Einrichtung zur Steuerung des Brennstoff-Luft-Verhältnisses bei der Verbrennung gemahlener Kohle, die Mittel zur pneumatischen Förderung der gemahlenen Kohle zu den Brennern der Kohlekraftwerksfeuerungsanlage sowie Mittel zur Zuführung der Verbrennungsluft zu den Brennern (16) bzw. in den Feuerungsraum (15) der Kohlekraftwerksfeuerungsanlage aufweist, wobei in Strömungsrichtung der Luft mindestens nachfolgende Einrichtungen angeordnet sind,
ein Frischlüfter (2) zum Ansaugen von Frischluft aus der Umgebung, ein Mühlenlüfter (3) zur Förderung eines Teiles der angesaugten Frischluft als Tragluft zur Beladung mit gemahlener Kohle, einen Luftvorwärmer (4) zur Vorwärmung der angesaugten Frischluft und eines Teiles der Tragluft unter Nutzung der Rauchgaswärme der Kohlekraftwerksfeuerungsanlage, eine Luftmengensteuereinrichtung zur Steuerung der in den Feuerungsraum (15) eingeleiteten Verbrennungsluftmenge, eine Luftmengensteuereinrichtung zur Steuerung der für die pneumatische Förderung der gemahlenen Kohle zu verwendenden Tragluftmenge sowie Messeinrichtungen (12,20,21) zur Messung der in den Feuerungsraum (15) eingeleiteten Verbrennungsluftmenge und der zur pneumatischen Förderung der gemahlenen Kohle zu verwendenden Tragluftmenge und eine Einrichtung (7,14) zur dosierten Zuführung einer vorgewählten Menge an gemahlener Kohle zu den Brennern (16),
und wobei zur Luftmengenmessung (12, 20, 21) eine durch elektrostatische Induktion an zwei in den Luftstrom, in Strömungsrichtung (s) der Luft hintereinander angeordneten Sensoren (11) erzeugte Signale auswertende Korrelationsmesseinrichtung (12) vorgesehen ist,
**dadurch gekennzeichnet, dass**
in Strömungsrichtung (s) der Luft vor den Sensoren (11) der Korrelationsmesseinrichtung (12) in einem Abstand I mit 1 x Lichte Weite des Strömungsquerschnittes des die Luft führenden Kanales < I < 10 x Lichte Weite des Strömungsquerschnittes des die Luft führenden Kanales im Bereich der Sensoren (11), bevorzugt 3 x Lichte Weite des Strömungsquerschnittes des die Luft führenden Kanales < I < 5 x Lichte Weite des Strömungsquerschnittes des die Luft führenden Kanales im Bereich der Sensoren (11), im Strömungsquerschnitt des die Luft führenden Kanales eine Elektrode (10) mit einer Elektrodenkontur mit einem mittleren Radius rₘ mit 0,1 mm ≤ rₘ ≤ 1,2 mm angeordnet ist, wobei der Abstand I der Abstand zwischen der Elektrode (10) und in Strömungsrichtung (s) der Luft dem ersten Sensor (11) der beiden hintereinander angeordneten Sensoren (11) ist, dass eine zu der Elektrode (10) elektrisch wirkende Gegenelektrode (13, 25) mindestens abschnittsweise in Strömungsrichtung (s) der Luft vor den Sensoren (11) angeordnet ist, und dass die Elektrode (10) sowie die Gegenelektrode (13, 25) mit den unterschiedlichen Polen einer Hochspannungsquelle (9), die für die Bereitstellung einer Spannung U von 12 kV ≤ U ≤ 20 kV ausgebildet ist, verbunden sind.

2. Kohlekraftwerksfeuerungsanlage nach Anspruch 1,
**dadurch gekennzeichnet, dass**
im Fall, dass die Kanalwandung (13) des die Luft führenden Kanales elektrisch leitfähig ist, die Kanalwandung (13) als Gegenelektrode zu der im Strömungsquerschnitt des die Luft führenden Kanales angeordneten Elektrode (10) geschaltet ist.

3. Kohlekraftwerksfeuerungsanlage nach Anspruch 1,
**dadurch gekennzeichnet, dass**
in Strömungsrichtung (s) der Luft nach der Elektrode (10) und vor den Sensoren (11) mindestens ein den Kanalquerschnitt mindestens zur Hälfte durchspannender elektrisch leitfähiger Stab (25) oder Draht angeordnet ist und dass dieser elektrisch leitfähige Stab (25) oder Draht elektrisch als Gegenelektrode zur Elektrode (10) geschaltet ist.

4. Kohlekraftwerksfeuerungsanlage nach Anspruch 1 bis 3,
**dadurch gekennzeichnet, dass**
die im Strömungsquerschnitt des die Luft führenden Kanales angeordnete Elektrode (10) als Kathode und die Gegenelektrode (13, 25) auf Massepotenzial geschaltet ist.

5. Kohlekraftwerksfeuerungsanlage nach Anspruch 1 bis 4,
**dadurch gekennzeichnet, dass**
die im Strömungsquerschnitt des die Luft führenden Kanales angeordnete Elektrode (10) eine oder mehrere Spitzen (24) oder Schneiden mit einer Kontur mit einem mittelren Radius rₘ mit 0,1 mm ≤ rₘ ≤ 1,2 mm aufweist oder als Draht mit einem mittelren Radius rₘ mit 0,1 mm ≤ rₘ ≤ 1,2 mm ausgebildet ist.

6. Kohlekraftwerksfeuerungsanlage nach Anspruch 1 bis 5,
**dadurch gekennzeichnet, dass**
die im Strömungsquerschnitt des die Luft führenden Kanales angeordnete Elektrode (10) als ein in den Strömungsquerschnitt ragender Stab ausgebildet und gegenüber der Wandung (13) des die Luft führenden Kanales isoliert angeordnet ist, wobei das in den Strömungsquerschnitt ragende Ende der Elektrode (10) etwa bis zur Mitte des Strömungsquerschnittes ragt und mindestens eine Spitze (24) oder Schneide mit einem mittelren Radius rₘ mit 0,1 mm ≤ rₘ ≤ 1,2 mm aufweist.

7. Kohlekraftwerksfeuerungsanlage nach Anspruch 1 bis 6,
**dadurch gekennzeichnet, dass**
in Strömumgsrichtung (s) der Luft nach einer im Strömungsquerschnitt des die Luft führenden Kanales angeordneten Elektrode (10) mehrere durch elektrostatische Induktion an zwei in den Luftstrom, in Strömungsrichtung (s) der Luft hintereinander angeordneten Sensoren (11) erzeugte Signale auswertende Korrelationsmesseinrichtungen (12.1, 12.2) vorgesehen sind.

8. Kohlekraftwerksfeuerungsanlage nach Anspruch 7,
**dadurch gekennzeichnet, dass**
in Strömumgsrichtung (s) der Luft nach einer im Strömungsquerschnitt des die Luft führenden Kanales angeordneten Elektrode (10) und nach einer in Strömungsrichtung der Luft dem Ort der Anordnung der Elektrode (10) nachfolgenden Verzweigung des die Luft führenden Kanales in den einzelnen Kanalzweigen durch elektrostatische Induktion an zwei in den Luftstrom, in Strömungsrichtung (s) der Luft hintereinander angeordneten Sensoren (11) erzeugte Signale auswertende Korrelationsmesseinrichtungen (12.1, 12.2) vorgesehen sind.

9. Verfahren zum Betrieb einer Kohlekraftwerksfeuerungsanlage mit einer Einrichtung zur Steuerung des Brennstoff-Luft-Verhältnisses bei der Verbrennung gemahlener Kohle, die Mittel zur Zuführung der gemahlenen Kohle zu den Brennern (16) der Kohlekraftwerksfeuerungsanlage sowie Mittel zur Zuführung der Verbrennungsluft zu den Brennern (16) bzw. in den Feuerungsraum (15) der Kohlekraftwerksfeuerungsanlage gemäß den Ansprüchen 1 bis 7 aufweisen, wobei die Verbrennungsluftmengenmessung und die Tragluftmengenmessung auf der Grundlage der Auswertung von an in Strömungsrichtung (s) der Luft hintereinander im Strömungsquerschnitt des die Luft führenden Kanales angeordneten Sensoren (11) durch elektrostatische Induktion erzeugten Signalen nach der Korrelationsmessmethode erfolgt,
**dadurch gekennzeichnet, dass**
in Strömungsrichtung (s) der Luft in einem Abstand I mit 1 x Lichte Weite des Strömungsquerschnittes des die Luft führenden Kanales < I < 10 x Lichte Weite des Strömungsquerschnittes des die Luft führenden Kanales im Bereich der Sensoren (11), bevorzugt 3 x Lichte Weite des Strömungsquerschnittes des die Luft führenden Kanales < I < 5 x Lichte Weite des Strömungsquerschnittes des die Luft führenden Kanales im Bereich der Sensoren (11), im Strömungsquerschnitt des die Luft führenden Kanales vor den Sensoren (11) mindestens ein Teil des Luftstromes der Wirkung einer eine Spannung U von 12 kV ≤ U ≤ 20 kV, bevorzugt 15 kV ≤ U ≤ 17 kV, führenden Elektrode (10) mit einer Elektrodenkontur mit einem mittleren Radius rₘ mit 0,1 mm ≤ rₘ ≤ 1,2 mm ausgesetzt und dadurch ionisiert wird und die Sensoren (11) nicht der direkten Wirkung des durch die Spannung U angetriebenen, zwischen der Elektrode (10) und einer Gegenelektrode (13, 25) fließenden Ionenstromes ausgesetzt werden.

10. Verfahren nach Anspruch 9,
**dadurch gekennzeichnet, dass**
die Elektrode (10) eine konstante negative Spannung U führt.

11. Verfahren nach Anspruch 9,
**dadurch gekennzeichnet, dass**
die Elektrode (10) eine zeitlich veränderliche Spannung U mit Maximalwerten zwischen 12 kV ≤ U ≤ 20 kV, bevorzugt 15 kV ≤ U ≤ 17 kV, führt.

12. Verfahren nach Anspruch 9,
**dadurch gekennzeichnet, dass**
die Elektrode (10) eine gepulste Spannung U mit Maximalwerten zwischen 12 kV ≤ U ≤ 20 kV, bevorzugt 15 kV ≤ U ≤ 17 kV, und einer Impulsdauer von ca. 1 ms führt.

13. Verfahren nach Anspruch 12,
**dadurch gekennzeichnet, dass**
die Elektrode (10) periodisch eine Anzahl von n Impulsen einer Spannung U mit Maximalwerten zwischen 12 kV ≤ U ≤ 20 kV, bevorzugt 15 kV ≤ U ≤ 17 kV, wobei 2 ≤ n ≤ 10 ist, und einer Impulsdauer von ca. 1 ms führt und dass die Periodendauer der n Impulse zwischen 0,2 s bis 3,0 s, bevorzugt zwischen 1,0 s bis 1,5 s, liegt.

14. Verfahren nach Anspruch 12 oder 13,
**dadurch gekennzeichnet, dass**
die Auswertung der an den in Strömungsrichtung (s) der Luft hintereinander im Strömungsquerschnitt des die Luft führenden Kanales angeordneten Sensoren (11) durch elektrostatische Induktion erzeugten Signalen nach der Korrelationsmessmethode zeitversetzt zu den Impulsen der Spannung U, die die Elektrode (10) führt, erfolgt.

15. Verfahren nach Anspruch 14,
**dadurch gekennzeichnet, dass**
der Zeitversatz zwischen den Impulsen der Spannung U und der Auswertung der an den Sensoren (11) durch elektrostatische Induktion erzeugten Signalen nach der Korrelationsmessmethode zwischen 5 ms bis 150 ms, bevorzugt zwischen 8 ms bis 70 ms, liegt.

16. Verfahren nach einem der Ansprüche 9 bis 15
**dadurch gekennzeichnet, dass**
im Fall, dass die Kohlekraftwerksfeurungsanlge einen Regenerativ-Luftvorwärmer (4) aufweist, die Elektrode (10) nur dann eine Spannung führt, wenn kein Eintrag gemahlener Kohle in die Tragluft erfolgt und somit über den Regenerativ-Luftvorwärmer (4) keine Flugaschepartikel in die Frischluft eingetragen werden oder wenn die Strömungsgeschwindigkeit der Verbrennungsluft oder der Tragluft unter einen Wert von 10 m/s sinkt oder wenn eine Überprüfung der Steuerung des Brennstoff-Luft-Verhältnisses während des normalen Kraftwerksbetriebes erfolgen soll.

## Claims

1. Firing system of a coal-fired power station with a a device for controlling the fuel-air ratio in the combustion of ground coal that has means for pneumatically conveying the ground coal to the burners of the firing system of the coal-fired power station and also means for feeding the combustion air to the burners (16) or into the combustion chamber (15) of the firing system of the coal-fired power station, wherein at least the following devices are arranged in the direction of flow of the air,
a fresh-air blower (2) for drawing in fresh air from the surroundings, a mill fan (3) for conveying part of the drawn-in fresh air as carrier air for charging with ground coal, an air preheater (4) for preheating the drawn-in fresh air and part of the carrier air by using the flue gas heat of the firing system of the coal-fired power station, an air flow-control device for controlling the amount of combustion air introduced into the combustion chamber (15), an air flow-control device for controlling the amount of carrier air used for the pneumatic conveyance of the ground coal as well as measuring devices (12, 20, 21) for measuring the amount of combustion air introduced into the combustion chamber (15) and the amount of carrier air used for pneumatic conveyance of the ground coal, and a device (7, 14) for the metered feeding of a preselected amount of ground coal to the burners (16),
and wherein a correlation measuring device (12), which evaluates signals generated by electrostatic induction at two sensors (11) arranged sequentially in the air flow, in the direction of flow (s) of the air, is provided for measuring the amount of air (12, 20, 21),
**characterized in that**
an electrode (10) with an electrode contour having an average radius rₘ with 0.1 mm ≤ rₘ ≤ 1.2 mm is arranged in the flow cross section of the channel carrying the air in the direction of flow (s) of the air upstream of the sensors (11) of the correlation measuring device (12) at a distance 1 with 1 x the clear width of the flow cross section of the channel carrying the air < 1 < 10 × the clear width of the flow cross section of the channel carrying the air in the region of the sensors (11), preferably 3 × the clear width of the flow cross section of the channel carrying the air < 1 < 5 × the clear width of the flow cross section of the channel carrying the air in the region of the sensors (11), wherein the distance 1 is the distance between the electrode (10) and the first sensor (11) of the two sequentially arranged sensors (11) in the direction of flow (s) of the air, **in that** a counter electrode (13, 25) acting electrically in relation to the electrode (10) is arranged at least in sections upstream of the sensors (11) in the direction of flow (s) of the air, and **in that** the electrode (10) and the counter electrode (13, 25) are connected to the different poles of a high-voltage source (9) that is designed for providing a voltage U of 12 kV ≤ U ≤ 20 kV.

2. Firing system of a coal-fired power station according to Claim 1,
**characterized in that**
in the case where the channel wall (13) of the channel carrying the air is electrically conductive, the channel wall (13) is connected as the counter electrode in relation to the electrode (10) arranged in the flow cross section of the channel carrying the air.

3. Firing system of a coal-fired power station according to Claim 1,
**characterized in that**
at least one electrically conductive rod (25) or wire spanning at least half of the channel cross section is arranged downstream of the electrode (10) and upstream of the sensors (11) in the direction of flow (s) of the air and **in that** this electrically conductive rod (25) or wire is electrically connected as the counter electrode in relation to the electrode (10).

4. Firing system of a coal-fired power station according to Claims 1 to 3,
**characterized in that**
the electrode (10) arranged in the flow cross section of the channel carrying the air is connected as the cathode and the counter electrode (13, 25) is connected to earth potential.

5. Firing system of a coal-fired power station according to Claims 1 to 4,
**characterized in that**
the electrode (10) arranged in the flow cross section of the channel carrying the air has one or more tips (24) or blades having a contour with an average radius rₘ with 0.1 mm ≤ rₘ ≤ 1.2 mm or is formed as a wire having an average radius rₘ with 0. 1 mm ≤ rₘ ≤ 1.2 mm.

6. Firing system of a coal-fired power station according to Claims 1 to 5,
**characterized in that**
the electrode (10) arranged in the flow cross section of the channel carrying the air is formed as a rod projecting into the flow cross section and is arranged in a manner insulated with respect to the wall (13) of the channel carrying the air, wherein the end of the electrode (10) projecting into the flow cross section extends approximately to the centre of the flow cross section and has at least one tip (24) or blade with an average radius rₘ with 0.1 mm ≤ rₘ ≤ 1.2 mm.

7. Firing system of a coal-fired power station according to Claims 1 to 6,
**characterized in that**
multiple correlation measuring devices (12.1, 12.2), which evaluate signals generated by electrostatic induction at two sensors (11) arranged sequentially in the air flow, in the direction of flow (s) of the air, are provided in the direction of flow (s) of the air downstream of an electrode (10) arranged in the flow cross section of the channel carrying the air.

8. Firing system of a coal-fired power station according to Claim 7,
**characterized in that**
correlation measuring devices (12.1, 12.2), which evaluate signals generated by electrostatic induction at two sensors (11) arranged sequentially in the air flow, in the direction of flow (s) of the air, are provided in the direction of flow (s) of the air downstream of an electrode (10) arranged in the flow cross section of the channel carrying the air and downstream of a branching of the channel carrying the air into the individual channel branches following the location of the arrangement of the electrode (10) in the direction of flow of the air.

9. Method for operating a firing system of a coal-fired power station with a device for controlling the fuel-air ratio in the combustion of ground coal that has means for feeding the ground coal to the burners (16) of the firing system of the coal-fired power station and also means for feeding the combustion air to the burners (16) or into the combustion chamber (15) of the firing system of the coal-fired power station according to Claims 1 to 7, wherein the measuring of the amount of combustion air and the measuring of the amount of carrier air are performed by the correlation measuring method on the basis of the evaluation of signals generated by electrostatic induction at sensors (11) arranged sequentially in the direction of flow (s) of the air in the flow cross section of the channel carrying the air,
**characterized in that**
upstream of the sensors (11) in the direction of flow (s) of the air at a distance 1 with 1 × the clear width of the flow cross section of the channel carrying the air < 1 < 10 × the clear width of the flow cross section of the channel carrying the air in the region of the sensors (11), preferably 3 × the clear width of the flow cross section of the channel carrying the air < 1 < 5 × the clear width of the flow cross section of the channel carrying the air in the region of the sensors (11) in the flow cross section of the channel carrying the air, at least part of the air flow is exposed to the effect of an electrode (10) that is carrying a voltage U of 12 kV ≤ U ≤ 20 kV, preferably 15 kV ≤ U ≤ 17 kV and has an electrode contour having an average radius rₘ with 0.1 mm ≤ rₘ ≤ 1.2 mm, and is thereby ionized, and the sensors (11) are not exposed to the direct effect of the ion current driven by the voltage U and flowing between the electrode (10) and a counter electrode (13, 25).

10. Method according to Claim 9,
**characterized in that**
the electrode (10) carries a constant negative voltage U.

11. Method according to Claim 9,
**characterized in that**
the electrode (10) carries a voltage U that is variable over time, with maximum values of 12 kV ≤ U ≤ 20 kV, preferably 15 kV ≤ U s 17 kV.

12. Method according to Claim 9,
**characterized in that**
the electrode (10) carries a pulsed voltage U, with maximum values of 12 kV ≤ U ≤ 20 kV, preferably 15 kV ≤ U s 17 kV, and a pulse duration of about 1 ms.

13. Method according to Claim 12,
**characterized in that**
the electrode (10) periodically carries a number of n pulses of a voltage U, with maximum values of 12 kV ≤ U ≤ 20 kV, preferably 15 kV ≤ U ≤ 17 kV, where 2 ≤ n ≤ 10, and a pulse duration of about 1 ms, and **in that** the period duration of the n pulses lies between 0.2 s and 3.0 s, preferably between 1.0 s and 1.5 s.

14. Method according to Claim 12 or 13,
**characterized in that**
the evaluation by the correlation measuring method of the signals generated by electrostatic induction at the sensors (11) arranged sequentially in the direction of flow (s) of the air in the flow cross section of the channel carrying the air is performed with a time offset in relation to the pulses of the voltage U carried by the electrode (10).

15. Method according to Claim 14,
**characterized in that**
the time offset between the pulses of the voltage U and the evaluation by the correlation measuring method of the signals generated by electrostatic induction at the sensors (11) lies between 5 ms and 150 ms, preferably between 8 ms and 70 ms.

16. Method according to one of Claims 9 to 15,
**characterized in that**
in the case where the firing system of the coal-fired power station is a regenerative air preheater (4), the electrode (10) only carries a voltage when no ground coal is introduced into the carrier air and consequently no fly ash particles are introduced into the fresh air via the regenerative air preheater (4), or when the flow velocity of the combustion air or of the carrier air falls below a value of 10 m/s or when a check on the control of the fuel-air ratio is to be performed during normal operation of the power station.

## Revendications

1. Installation de combustion de centrale au charbon dotée d'un dispositif de commande du rapport air-combustible lors de la combustion de charbon pulvérisé, qui présente des moyens pour le transport pneumatique du charbon pulvérisé vers les brûleurs de l'installation de combustion de centrale au charbon ainsi que des moyens pour amener l'air de combustion aux brûleurs (16) ou au foyer (15) de l'installation de combustion de centrale au charbon, au moins les dispositifs suivants étant disposés dans le sens d'écoulement de l'air,
un ventilateur à air frais (2) pour aspirer de l'air frais de l'environnement, un ventilateur à poussier (3) pour transporter une partie de l'air frais aspiré en tant qu'air porteur destiné à être chargé en charbon pulvérisé, un réchauffeur d'air (4) pour réchauffer l'air frais aspiré et une partie de l'air porteur en utilisant la chaleur des gaz de combustion de l'installation de combustion de centrale au charbon, un dispositif de commande de débit d'air pour commander le débit d'air de combustion introduit dans le foyer (15), un dispositif de commande de débit d'air pour commander le débit d'air porteur à utiliser pour le transport pneumatique du charbon pulvérisé ainsi que des dispositifs de mesure (12, 20, 21) pour mesurer le débit d'air de combustion introduit dans le foyer (15) et le débit d'air porteur à utiliser pour le transport pneumatique du charbon pulvérisé et un dispositif (7, 14) pour l'amenée dosée d'une quantité présélectionnée de charbon pulvérisé aux brûleurs (16),
un dispositif de mesure par corrélation (12) qui évalue des signaux produits par induction électrostatique à deux capteurs (11) disposés l'un derrière l'autre dans le flux d'air, dans le sens d'écoulement (s) de l'air, étant prévu pour la mesure du débit d'air (12, 20, 21),
**caractérisée en ce que**
une électrode (10) ayant un contour d'électrode de rayon moyen rₘ, avec 0,1 mm ≤ rₘ ≤ 1,2 mm, est disposée dans le sens d'écoulement (s) de l'air avant les capteurs (11) du dispositif de mesure par corrélation (12), à une distance I telle que 1 x le diamètre intérieur de la section d'écoulement du canal conduisant l'air < I < 10 x le diamètre intérieur de la section d'écoulement du canal conduisant l'air dans la zone des capteurs (11), de préférence 3 x le diamètre intérieur de la section d'écoulement du canal conduisant l'air < I < 5 x le diamètre intérieur de la section d'écoulement du canal conduisant l'air dans la zone des capteurs (11), dans la section d'écoulement du canal conduisant l'air, la distance I étant la distance entre l'électrode (10) et le premier capteur (11) dans le sens d'écoulement (s) de l'air des deux capteurs (11) disposés l'un derrière l'autre, qu'une contre-électrode (13, 25) agissant électriquement par rapport à l'électrode (10) est disposée au moins sur certaines parties avant les capteurs (11) dans le sens d'écoulement (s) de l'air et que l'électrode (10) ainsi que la contre-électrode (13, 25) sont reliées aux différents pôles d'une source de haute tension (9) qui est conçue pour fournir une tension U telle que 12 kV ≤ U ≤ 20 kV.

2. Installation de combustion de centrale au charbon selon la revendication 1,
**caractérisée en ce que**
dans le cas où la paroi de canal (13) du canal conduisant l'air est électriquement conductrice, la paroi de canal (13) est connectée en tant que contre-électrode par rapport à l'électrode (10) disposée dans la section d'écoulement du canal conduisant l'air.

3. Installation de combustion de centrale au charbon selon la revendication 1,
**caractérisée en ce que**
au moins une barre électriquement conductrice (25) ou un fil métallique qui s'étend au moins à travers la moitié de la section de canal est disposé(e) après l'électrode (10) et avant les capteurs (11) dans le sens d'écoulement (s) de l'air, et que cette barre électriquement conductrice (25) ou ce fil métallique est connecté(e) électriquement en tant que contre-électrode par rapport à l'électrode (10).

4. Installation de combustion de centrale au charbon selon les revendications 1 à 3,
**caractérisée en ce que**
l'électrode (10) disposée dans la section d'écoulement du canal conduisant l'air est connectée en tant que cathode et la contre-électrode (13, 25) est connectée au potentiel de masse.

5. Installation de combustion de centrale au charbon selon les revendications 1 à 4,
**caractérisée en ce que**
l'électrode (10) disposée dans la section d'écoulement du canal conduisant l'air présente une ou plusieurs pointes (24) ou lames ayant un contour d'un rayon moyen rₘ, avec 0,1 mm ≤ rₘ ≤ 1,2 mm, ou est réalisée sous la forme d'un fil métallique d'un rayon moyen rₘ, avec 0,1 mm ≤ rₘ < 1,2 mm.

6. Installation de combustion de centrale au charbon selon les revendications 1 à 5,
**caractérisée en ce que**
l'électrode (10) disposée dans la section d'écoulement du canal conduisant l'air est réalisée sous la forme d'une barre faisant saillie dans la section d'écoulement et isolée par rapport à la paroi (13) du canal conduisant l'air, l'extrémité de l'électrode (10) faisant saillie dans la section d'écoulement fait saillie environ jusqu'au milieu de la section d'écoulement et présente au moins une pointe (24) ou une lame d'un rayon moyen rₘ, avec 0, 1 mm ≤ rₘ ≤ 1,2 mm.

7. Installation de combustion de centrale au charbon selon les revendications 1 à 6,
**caractérisée en ce que**
plusieurs dispositifs de mesure par corrélation (12.1, 12.2) qui évaluent des signaux produits par induction électrostatique à deux capteurs (11) disposés l'un derrière l'autre dans le flux d'air, dans le sens d'écoulement (s) de l'air, sont prévus après une électrode (10) disposée dans la section d'écoulement du canal conduisant l'air, dans le sens d'écoulement (s) de l'air.

8. Installation de combustion de centrale au charbon selon la revendication 7,
**caractérisée en ce que**
des dispositifs de mesure par corrélation (12.1, 12.2) qui évaluent des signaux produits par induction électrostatique à deux capteurs (11) disposés l'un derrière l'autre dans le flux d'air, dans le sens d'écoulement (s) de l'air, sont prévus après une électrode (10) disposée dans la section d'écoulement du canal conduisant l'air, dans le sens d'écoulement (s) de l'air, et après une division du canal conduisant l'air en les différentes branches de canal qui suit le lieu de la disposition de l'électrode (10) dans le sens d'écoulement (s) de l'air.

9. Procédé pour faire fonctionner une installation de combustion de centrale au charbon dotée d'un dispositif de commande du rapport air-combustible lors de la combustion de charbon pulvérisé, qui présente des moyens pour amener le charbon pulvérisé vers les brûleurs (16) de l'installation de combustion de centrale au charbon ainsi que des moyens pour amener l'air de combustion aux brûleurs (16) ou au foyer (15) de l'installation de combustion de centrale au charbon selon les revendications 1 à 7, selon lequel la mesure du débit d'air de combustion et la mesure du débit d'air porteur ont lieu sur la base de l'évaluation de signaux produits par induction électrostatique à des capteurs (11) disposés l'un derrière l'autre dans la section d'écoulement du canal conduisant l'air, dans le sens d'écoulement (s) de l'air, selon la méthode de la mesure par corrélation, **caractérisé en ce que**
dans le sens d'écoulement (s) de l'air, à une distance I telle que 1 x le diamètre intérieur de la section d'écoulement du canal conduisant l'air < I < 10 x le diamètre intérieur de la section d'écoulement du canal conduisant l'air dans la zone des capteurs (11), de préférence 3 x le diamètre intérieur de la section d'écoulement du canal conduisant l'air < I < 5 x le diamètre intérieur de la section d'écoulement du canal conduisant l'air dans la zone des capteurs (11), avant les capteurs (11) dans la section d'écoulement du canal conduisant l'air, au moins une partie du flux d'air est exposée à l'action d'une électrode (10) U conduisant une tension U telle que 12 kV ≤ U ≤ 20 kV, de préférence 15 kV ≤ U ≤ 17 kV, ayant un contour d'électrode de rayon moyen rₘ, avec 0,1 mm ≤ rₘ ≤ 1,2 mm, et est ionisée par celle-ci, et les capteurs (11) ne sont pas exposés à l'action directe du flux d'ions entraîné par la tension U, qui s'écoule entre l'électrode (10) et une contre-électrode (13, 25).

10. Procédé selon la revendication 9,
**caractérisé en ce que**
l'électrode (10) conduit une tension U négative constante.

11. Procédé selon la revendication 9,
**caractérisé en ce que**
l'électrode (10) conduit une tension U variable dans le temps ayant des valeurs maximales comprises entre 12 kV ≤ U ≤ 20 kV, de préférence 15kV ≤ U ≤ 17kV.

12. Procédé selon la revendication 9,
**caractérisé en ce que**
l'électrode (10) conduit une tension U pulsée ayant des valeurs maximales comprises entre 12 kV ≤ U ≤ 20 kV, de préférence 15 kV ≤ U ≤ 17 kV, et une durée d'impulsion d'environ 1 ms.

13. Procédé selon la revendication 12,
**caractérisé en ce que**
l'électrode (10) conduit périodiquement un nombre de n impulsions d'une tension U ayant des valeurs maximales comprises entre 12 kV ≤ U ≤ 20 kV, de préférence 15 kV ≤ U ≤ 17 kV, avec 2 ≤ n ≤ 10, et une durée d'impulsion d'environ 1 ms et que la période des n impulsions est comprise entre 0,2 s et 3,0 s, de préférence entre 1,0 s et 1,5 s.

14. Procédé selon les revendications 12 ou 13,
**caractérisé en ce que**
l'évaluation des signaux produits par induction électrostatique aux capteurs (11) disposés l'un derrière l'autre dans la section d'écoulement du canal conduisant l'air, dans le sens d'écoulement (s) de l'air, a lieu selon la méthode de la mesure par corrélation de manière décalée dans le temps par rapport aux impulsions de la tension U que l'électrode (10) conduit.

15. Procédé selon la revendication 14,
**caractérisé en ce que**
le décalage dans le temps entre les impulsions de la tension U et l'évaluation des signaux produits par induction électrostatique aux capteurs (11) selon la méthode de la mesure par corrélation est compris entre 5 ms et 150 ms, de préférence entre 8 ms et 70 ms.

16. Procédé selon l'une des revendications 9 à 15,
**caractérisé en ce que**
dans le cas où l'installation de combustion de centrale au charbon présente un réchauffeur d'air régénératif (4), l'électrode (10) conduit une tension seulement lorsqu'aucun apport de charbon pulvérisé n'a lieu dans l'air porteur et donc qu'aucune particule de cendres volantes n'est apportée dans l'air frais par le réchauffeur d'air régénératif (4) ou lorsque la vitesse d'écoulement de l'air de combustion ou de l'air porteur devient inférieure à une valeur de 10 m/s ou lorsqu'une vérification de la commande du rapport air-combustible doit avoir lieu pendant le fonctionnement normal de la centrale.
